# EUROPEAN PATENT APPLICATION

(11) **EP 4 141 627 A1**
(43) Date of publication of application: **01.03.2023**
(21) Application number: 21193375.9
(22) Date of filing: 26.08.2021
(51) Int. Cl.: G06F 3/041, G06F 3/039, G06F 3/044

(54) **CONTROLLER AND METHOD FOR CONTROLLING A MUTUAL CAPACITIVE SENSOR ARRAY, AND SENSOR SYSTEM**

(71) Applicant: Interactive Scape GmbH, 10179 Berlin (DE)
(72) Inventor: Coope, Giles, 10179 Berlin (DE); Ewerling, Philipp, 10179 Berlin (DE); Helmer, Hauke, 10179 Berlin (DE); Mangold, Ulrich, 10179 Berlin (DE); Peters, Günter Paul, 10179 Berlin (DE)
(74) Representative: Pfenning, Meinig & Partner mbB

(57) **Abstract**

The present application relates to a controller and a method for controlling a mutual capacitive sensor array as well as a sensor system.

## Description

The present application relates to a controller and a method for controlling a mutual capacitive sensor array as well as a sensor system.

Capacitive sensors are used today in many different applications, most notably in touch/sensitive displays, such as the displays of smartphones, tablets, or other touch/sensitive computing devices as well as vending machines. Capacitive sensors are also used in capacitive buttons, such as touch/sensitive buttons of household appliances, calculators, light switches and many more devices/applications/products. An advantage of touch sensitive displays lies in that fact that the input e.g. interaction areas as well as the output can be affected via the screen.

Touch/sensitive displays are typically able to detect the location on the screen which was touched, for example by a finger.

Capacitive sensors (whether integrated into a touch screen or not) may comprise a grid of electrical conductors such as electrodes, which are arranged in columns and rows aligned perpendicular to each other, wherein the column and row conductors are separated by a layer of insulating material. The row conductors periodically or regularly send electrical signals to the column conductors, or vice versa depending on the actual design of the capacitive sensor. When the sensor is touched, the electrical capacitance of the electrodes running close to the touch position and the mutual electrical capacitance between the row and column electrodes that intersect close to the touch position changes and the signal received at the sensing electrode changes as well, typically by becoming weaker. A processor then determines a position at which the capacitance signal has changed and sends the location and duration of the touch to software of the respective device, which then carries out the respective action based on the touch.

Such projected capacitive sensors are typically paired with controllers that drive the electrodes of the conductors to specific AC voltages and frequencies and measure changes in capacitances along the conductors such as electrodes.

In capacitive sensors, generally self capacitance mode and mutual capacitance mode can be distinguished. In self capacitance mode all row electrodes and in a second step all column electrodes are driven simultaneously to the same voltage and the change in capacitance along each driven electrode is measured. This results in a row vector and column vector of measured values. In this mode it is often impossible to discern the true positions of multiple simultaneous touches, and non-grounded objects (e.g. non-touched objects) cannot be observed in self capacitance data. This can be advantageous, for example, if the sensor is wet there is little interference. Therefore, self capacitance measurements are mainly used in single-touch applications or in conditions that are not suitable for mutual capacitance e.g. moisture on the screen or a user wearing thick gloves. However, this same feature makes self-capacitance useless for conductive object recognition, such as smartphones or other objects placed on the sensor.

For object recognition the mutual capacitance mode is commonly used. Examples for such object recognition are shown in WO 2019/201464 A1 and WO 2021/063927 A1.

In mutual capacitance mode each row (or column) electrode is driven independently, either one after the other or at different frequencies. In mutual capacitance mode each row (or column) electrode is driven to a specific voltage and frequency, and all of the column (or row) electrodes which intersect or cross it are simultaneously measured for a change in capacitance. This gives a value per electrode crossing point, which can be understood as a two-dimensional grayscale image corresponding to the two-dimensional geometry of the sensor. In mutual capacitance mode the positions of multiple simultaneous touch points can be determined unambiguously. Using computer vision algorithms one can discern the absolute coordinates of multiple simultaneous touch points or other conductive objects on the sensor.

Conductive objects that are placed on the capacitive sensor and not touched do not generally exhibit high capacitance, thus one might not expect them to be detectable. Indeed, using self-capacitance such objects are essentially invisible to the capacitive sensor. However, such ungrounded objects can be visible in the mutual capacitance data, due to an effect known as retransmission, where the driven signal is transmitted through the electrically conductive object and into other grounded electrodes in the sensor. This can result in either a loss or gain in mutual capacitance between row and column electrodes. Retransmission can also be observed when a person places two fingers of the same hand onto the capacitive sensor.

Retransmission in a touch-sensitive screen can cause several effects. First, retransmission can cause a touch sensor controller to interpret a single large touch as multiple touches. Second, retransmission can reduce the touch amplitude of a signal, reducing the accuracy of touch position estimation. For example, the touch sensor control unit may misinterpret a touch in the upper left portion of the touch sensitive screen as a touch in the upper center portion of the touch sensitive screen. Third, retransmission can reduce the values of the touch amplitude in such a way that a so-called "anti-touch" with negative amplitudes is generated.

These retransmission effects are often described in literature and prior art as being disadvantageous. For example, US patent 9 335 873 B2 focuses on compensation of retransmission effects. Further, the book "Projected Capacitive Touch - a practical guide for engineers" by Tony Gray, Springer 2019, ISBN 978-3-319-98391-2 describes retransmission in chapters 17 and 18 and also techniques to mitigate or combat retransmission.

The publication WO 2021/063927 A1 relates to an input device for a capacitive sensitive sensor, the input device having a conductive structure on its bottom side that is placed onto the capacitive sensor. The input device is configured such that it can be detected by the capacitive sensitive sensor, even when the input device is not touched by a user. This is achieved by the special design of the conductive structure which takes advantage of the above mentioned retransmission effects. In particular, patterns of conductive materials, such as conductive ink or ITO coating on PET film, can be designed to be tracked using more advanced computer vision and machine learning approaches based on the raw capacitive mutual sensor data. The patterns are no longer confused with touches and smaller and more varied patterns are made possible.

While WO 2021/063927 A1 focuses on the passive input devices having an additional conductive pattern, sometimes it may be desirable to also detect objects or input devices that are not specially designed to be detected by a capacitive sensor array.

Some objects with electrically conductive parts, such as smartphones, can be detectable without an additional conductive pattern designed for detection by the capacitive sensor. For instance, a smartphone lying at a tilted angle to the direction of the sensor wires can be visible in the mutual data. Combining this information with sensor data from the smartphone itself allows the tracking of individual smartphones and tablets on the surface of the capacitive sensor, see e.g. WO 2019/201464 A1. However, when the device is placed at a multiple of 90 degrees relative to the direction of the sensor grid (i.e. parallel or perpendicular) the positive signals and negative retransmission cancel out and the device is difficult to reliably track.

Thus, there is an ongoing need for improved object detection on capacitive sensor arrays, including detection of objects that are not designed to be detected by a capacitive sensor array.

The present invention has been made to at least partially solve the above mentioned issues, and is defined by the controller, the sensor system and the method according to the independent claims. Further advantageous embodiments are defined according to the dependent claims as well as the following description and figures.

Accordingly, a controller for controlling a mutual capacitive sensor array is provided, wherein the capacitive sensor array comprises a set of row electrodes and a set of column electrodes. The controller is configured to
- apply a drive signal to a first electrode being selected from the set of row electrodes and/or the set of column electrodes;
- receive a sense signal from at least a second electrode being selected from the same set of electrodes as the first electrode; and
- determine that an object is located on the capacitive sensor array based on the received sense signal.

The object located on the capacitive sensor array changes and/or causes a capacitive coupling between the first electrode and the second electrode.

In conventional solutions, a row electrode is driven and a column electrode is measured (or vice versa) in mutual capacitive measurements. In contrast, according to the present invention, if the drive signal is applied to a row electrode, the sense signal is received from a further row electrode. If the drive signal is applied to a column electrode, the sense signal is received from a further column electrode.

By controlling the mutual capacitive sensor array in the proposed manner, object detection can be improved. For instance, objects can be detected on the capacitive sensor array in conditions where they disappear in the traditional mutual data.

The presence of the object on the capacitive sensor array may cause a change (e.g. decrease or increase) in the capacitive coupling between the first and second electrodes or render possible the capacitive coupling of the first and second electrodes relative to each other. For instance, the received sense signal is caused by a coupling of the drive signal applied to the first electrode into the second electrode through the object located on the capacitive sensor array. In some instances, the coupling of the drive signal into the second electrode is rendered possible when an object spanning the first and second electrodes is resting on the capacitive sensor array. In this case, the drive signal may be transmitted through the object and injected into the second electrode. Therefore, the signal measured at the second electrode changes as compared to the case without an object lying on the capacitive sensor array. The change in capacitance induced by the object may be positive or negative, depending e.g. on the location of the object on the capacitive sensor array and/or the location of the second electrode relative to the first electrode. In some cases, the capacitive coupling between the first and second electrodes increases, e.g. when a distance between the first and second electrodes exceeds a predetermined threshold. Such a case includes electrodes being spaced by at least a further electrode extending therebetween. In other cases, the capacitive coupling between the first and second electrodes decreases, e.g. when a distance between the first and second electrodes falls below a predetermined threshold. Such a case includes neighbouring electrodes. See also the below discussion.

The object does not have to span both the first and second electrodes in order to be detectable by the controller. In some cases, it may be sufficient that the object is located above or in the vicinity of the driven (first) electrode. For instance, it should be mentioned that a neighbouring electrode of the driven electrode may already have a more or less strong coupling to the driven electrode, as the distance between the sensed neighbouring electrode and the driven electrode can be sufficiently small to allow for such a coupling even in the absence of an object crossing both electrodes. When the object is present on the capacitive sensor array, it may occur that the coupling of the driven electrode to the neighbouring electrode is less than when in absence of the object. For instance, the object may cause the drive signal to be spread out over the surface of the capacitive sensor array covered by the object (or at least the electrically conductive part of the object) and away from the neighbouring electrode, which leads to a decrease in signal strength measured in the sensed second electrode being directly adjacent to the driven first electrode. This decrease in signal strength can also be a characteristic signal which the controller can use to determine that the object is located on the capacitive sensor array.

Accordingly, in some embodiments, the first and second electrodes are neighbouring electrodes (directly adjacent electrodes) or the first and second electrodes are spaced apart by at least a further electrode of the same set of electrodes as the first and second electrodes extending between the first and second electrodes. Optionally, the first and second electrodes run parallel to one another. Alternatively, the first and second electrodes at least in sections do not run parallel to each other. It should be mentioned, however, that the first and second electrodes do not cross or intersect each other.

On the other hand, the row electrodes and the column electrodes may intersect or cross each other. For ease of description, in the following description the term "electrodes" can refer to either the row electrodes or the column electrodes or to both the column and the row electrodes. In many applications, each of the electrodes may extend in a substantially straight fashion. Sometimes, the electrodes may extend at least partially in a substantially curved fashion. Typically, the row electrodes may lie in the same plane. Similarly, the column electrodes may lie in the same plane, which usually differs from the plane of the row electrodes by an offset. Said planes, however, may be aligned parallel to each other. Curved surfaces are also conceivable. Usually, the row electrodes do not intersect or cross each other. Often, the row electrodes are aligned parallel to each other and run parallel to each other. Furthermore, the column electrodes may not intersect or cross each other. Often, the column electrodes are aligned parallel to each other and run parallel to each other. Usually, the row electrodes and the column electrodes are aligned to each other at an angle, wherein the angle can be e.g. 90°. It should be mentioned, however that said angle can also be smaller or greater than 90°, e.g. > 45° and/or < 135°, which may depend on the actual design of the capacitive sensor.

The controller can be further configured to select the first electrode from the set of row electrodes and the set of column electrodes. Depending on the selected first electrode the controller can then select the second electrode. In some instances, the second electrode has a predefined relationship to the first electrode, i.e. always being the neighbour or being spaced apart by a predetermined number of electrodes extending therebetween. Alternatively, the second electrode may be randomly selected from the same set of electrodes as the first electrode.

Based on the drive signal and the received sense signal a mutual capacitance value can be determined for the selected first electrode - second electrode pair. In this way, the mutual capacitance between two row electrodes or between two column electrodes can be determined. The determined value can be compared with prestored or reference values. If the deviation between the determined value and the prestored or reference value exceeds or falls below a predetermined threshold, the controller may determine the presence of the object on the capacitive sensor array.

A reference signal, such as a baseline signal, can be subtracted from the received sense signal before the received sense signal is further processed. The received sense signal may also be converted into a data format suitable for processing by the controller.

The received sense signal can comprise a retransmission signal having an amplitude that usually is larger than that of a capacitive touch signal. In this case, the object may span both the first and second electrodes (i.e. is located above the first electrode and the second electrode). The above mentioned retransmission effects can thus be used to better distinguish objects lying on the capacitive sensor. The controller may be configured to determine that the received sense signal is a retransmission signal. Optionally, the determining that the received sense signal is a retransmission signal comprises: comparing the received sense signal with a threshold value. The threshold value can be preset or can be changed dynamically based on a calibration of the sensor array, which may be updated from time to time. Retransmission signals, also known as "anti-touch" signals, usually have a higher signal level as compared to calibrated values. In contrast, a lower signal level compared to the calibrated value usually indicates a touch signal. Therefore, by comparing their amplitudes it is straightforward to distinguish the retransmission signals from touch signals.

Optionally, the controller is further configured to determine where the object is located on the capacitive sensor array and/or how the object is oriented on the capacitive sensor array based on a plurality of received sense signals, which are preferably received from a plurality of second electrodes being selected from the same set of electrodes as the first electrode. To this end, the plurality of received sense signals may be compared with stored patterns of known objects.

In some embodiments, the controller is further configured to receive an auxiliary sense signal from the first electrode, preferably while driving the first electrode, and determine that an object is located on the capacitive sensor array based on the received sense signal and the received auxiliary sense signal. Thus, not only can the controller analyse the at least one second electrode including neighbouring or other electrodes running parallel to the first driven electrode, but also sense signals received from the first electrode when the first electrode is driven. This can further increase the sensitivity of the controller with respect to object detection.

Optionally, the controller is configured to generate a capacitance matrix comprising row and column elements based on the drive signals and the associated sense signals and/or a capacitive image comprising pixels based on the drive signals and the associated sense signals. Alternatively or additionally, computer vision algorithms may be used to determine the location and/or orientation of the object on the capacitive sensor array based on the generated capacitance matrix and/or the capacitive image.

The capacitive sensor may be substantially flat and/or rectangular. In some embodiments, the capacitive sensor may be part of a touch screen or a touch table including a touch sensitive display as table top. Note that the application is, however, not limited to touch tables, but could also be applied to other capacitive sensors, including capacitive sensors which are arranged in a three-dimensional surface. The capacitive sensor can also be part of a tablet computer or other touch sensitive display. It is noted, however, that the incorporation of the capacitive sensor into a touch sensitive display is optional. The capacitive sensor can also be used without display. In some embodiments, the capacitive sensor array is a projected capacitive sensor array, also known as PCAP.

The controller may be configured to detect multiple simultaneous touches and/or objects at the same time. In some embodiments, the controller can track movements and/or rotations of the object located on the capacitive display based on capacitive measurements. The object can thus be used as input device for the capacitive sensor array.

The object to be detected may be at least partially electrically conductive and/or have at least an electrically conductive structure. More specifically, the part or side of the object facing the capacitive sensor array may comprise at least one electrically conductive structure. The object may have at least one symmetry axis. Furthermore, the object optionally has a rectangular shape.

The object can be any object which has electrically conductive structure(s) which contact or come in the vicinity of the capacitive sensor array to induce capacitive changes in at least part of the capacitive sensor array; the object does not need to be fully electrically conductive. Furthermore, the object does not have to be touched or in contact with ground in order to be detected by the controller, instead the object can be an untouched or ungrounded object. Said objects are regarded as ungrounded when they are not connected to ground either directly or indirectly. The object, however, can also be grounded. It should be mentioned that the capacitance changes which are triggered by the object resting on the capacitive sensor array are usually greater if the object is touched. Note in this respect that a human body can also act as a ground, as the human body can supply enough electrons or holes that it appears to be ground. Thus, if the object is touched, e.g. by a finger or hand of a user, the object can be regarded as grounded.

The distinction between ungrounded and grounded electrically conductive objects can be relevant as electrically conductive ungrounded objects are harder to detect in the sensor data and are usually disregarded by traditional capacitive sensor systems such as those used by smart phones or tablet computers. As indicated above, these capacitive changes can be induced by an effect known as retransmission, where a driven signal is transmitted through the electrically conductive part of the object and into other grounded electrodes in the capacitive sensor. This can result in either a loss or gain in mutual capacitance between row and column electrodes. These ungrounded conductive objects can be simple conductive circle- or cross-shaped objects, or the like, which are rotated or moved to specific locations of the sensor to indicate an input. Thus, these ungrounded conductive objects may serve as input devices for the capacitive sensor or touch sensitive display. Alternatively or additionally, also more complex ungrounded conductive objects, such as smartphones, smartphone-like input devices or other input devices can be used, which in addition to marking a location on the sensor can also receive additional input from the user, for example through a keyboard or the like, which is then additionally communicated to the respective sensor system. EP 3 574 398 A1 describes examples of ungrounded electrically conductive objects in the sense of the present application.

It has been found that with the controller conductive structures of the object such as a smartphone, or a tablet or of other electronic devices can be detected and their capacitance pattern can be recorded, even if the object is not touched. The conductive structures of the object which are detected as described above and represent a fingerprint of the object are for example strip conductors, parts of a camera of the device, parts of a battery of the device or parts of a housing of the device. The detected structures can therefore lie within a housing and in typical cases themselves have no direct contact with the touch-sensitive screen.

In further embodiments, the controller may be configured to apply drive signals to a plurality of first electrodes being selected from the set of row electrodes and/or the set of column electrodes and/or receive sense signals from a plurality of second electrodes running parallel to at least some of the plurality of first electrodes. In this fashion, the detection speed may be increased. Each of the drive signals can be applied to one of the first electrodes. The drive signals may each have a different characteristic drive frequency, wherein the controller is configured to distinguish the drive signals and/or the associated sense signals from one other by means of the characteristic drive frequency. In this regard, reference is made to US 10 917 101 B2. Furthermore, the controller may be configured to apply the drive signals to the plurality of first electrodes sequentially and/or simultaneously at different drive frequencies. Similarly, the sense signals may be received simultaneously. By means of the different characteristic drive frequencies it can be ensured that the received sense signals can be distinguished from each other, while the measurements can be performed simultaneously.

The controller may be further configured to apply a second drive signal to the first electrode, and receive a second sense signal from at least a third electrode being selected from the other set of electrodes, wherein the third electrode crosses the first electrode. In other words, mutual capacitive measurements are not only made between row-row and/or column-column pairs of electrodes, but also between row-column pairs of electrodes. In this embodiment, when the controller drives a row electrode, it not only measures the change in capacitance of all the columns, as in traditional mutual capacitance, but also at least one, or a plurality or all of the row electrodes, sometimes even including the driven row (see above). In case the controller drives a column electrode, it not only measures the change in capacitance of all the rows, as in traditional mutual capacitance, but also at least one, or a plurality or all of the columns electrodes, sometimes even including the driven column.

In other words, the controller may be also configured to perform traditional mutual capacitive measurements. These traditional mutual capacitive measurements can be performed concurrently with the extended capacitive measurements mentioned above. In this case, it may be envisaged that the first drive signals and the second drive signals have different drive frequencies, so that they and/or the associated received sense signals can be distinguished from each other. In some embodiments, the controller is configured to apply the second drive signal to the first electrode more frequently than the first drive signal to the first electrode.

In some instances, the controller is configured to ground the remaining of the row and column electrodes which are currently neither driven nor sensed. In this way, capacitive coupling to electrodes that are grounded can be selectively excluded, which may result in increased measurement accuracy.

The controller may comprise at least one processor, for example, to analyse the sense signals received from the electrodes. In some implementations, the controller can comprise drive circuitry to apply the drive signal(s) and/or sense circuitry to receive the sense signal(s).

According to a further aspect of the present disclosure, a further controller for controlling a mutual capacitive sensor array is provided, wherein the capacitive sensor array comprises a set of row electrodes and a set of column electrodes. The controller is configured to
- apply a drive signal to a first electrode being selected from the set of row electrodes and/or the set of column electrodes;
- receive a sense signal from said first electrode; and
- determine that an object is located on the capacitive sensor array based on the received sense signal.

The received sense signal is caused by a coupling of the drive signal applied to the first electrode into the first electrode through the object located on the capacitive sensor array.

Said further controller can have the same or similar properties as the controller described above. Features that have been described only with regard to the controller above can be combined and claimed with said further controller, as long as they do not contradict each other.

The present disclosure also relates to a sensor system. The sensor system comprises a mutual capacitive sensor array including a set of row electrodes and a set of column electrodes; and a controller for controlling the capacitive sensor array according to any one of the above mentioned embodiments. The sensor system may further include a memory and/or a display. The display can be combined with the mutual capacitive sensor array to form a capacitive touch screen. The memory may include program instructions for controlling the mutual capacitive sensor array and/or previous measurements and/or capacitance matrices and/or capacitive images. The components of the sensor system, i.e. the capacitive sensor array, the controller, and optionally the memory and the display, can be integrated into or associated with a touch table or touch screen which is operated by placing conductive objects onto a surface of said device.

It is noted that the capacitive sensor array may comprise at least the aforementioned set of row electrodes and at least the aforementioned set of column electrodes, i.e. capacitive sensor array may comprise further sets of electrodes.

The present disclosure further relates to a method for controlling a capacitive sensor array, wherein the capacitive sensor array comprises a set of row electrodes and a set of column electrodes. The method includes the steps
- applying a drive signal to a first electrode being selected from the set of row electrodes or the set of column electrodes;
- receiving a sense signal from at least a second electrode being selected from the same set of electrodes; and
- determining that an object is located on the capacitive sensor array based on the received sense signal.

The object located on the capacitive sensor array changes and/or causes a capacitive coupling between the first electrode and the second electrode.

Optionally, at least one of a symmetry axis, a longitudinal axis and a lateral axis of the object located on the capacitive sensor is aligned parallel to the row electrodes and/or the column electrodes. Even in this case, the object may be reliably detected due to the change in capacitive coupling or the generated capacitive coupling between the first and second electrodes.

It is to be noted that features which e.g. have only been mentioned with regard to the controller or the system can also be claimed for the mentioned method and vice versa.

Some advantages of the present disclosure are described below. Some embodiments of the present disclosure allow the reliable tracking of electrically conductive objects (e.g. a smartphone) resting on the capacitive sensor array, even when not grounded or touched by a user. Despite the object having sub-optimal geometry, e.g. not designed to be detected by the capacitive sensor array, the controller data can be processed to accurately track the position and rotation of said object on the sensor.

By using the controller and the method as describe above, non-grounded, electrically conductive objects can produce clear patterns in the extended mutual capacitive data, even in conditions where the traditional mutual data completely disappears, allowing for far more robust detection and tracking of the objects. In particular, smartphones and other rectangular devices can be accurately tracked on a projected capacitive sensor, regardless of their orientation relative to the capacitive sensor array, when the extended mutual capacitive data is used. The extended mutual data can also aid in other adverse conditions, for example when the sensor is wet.

Embodiments of the present invention are subsequently described with respect to the following drawings.
FIG. 1 shows a schematic drawing of a touch table comprising a capacitive sensor array;
FIG. 2 shows a visual representation of mutual capacitive measurements, wherein a capacitive sensor array is touched by five fingers;
FIG. 3 shows a visual representation of mutual capacitive measurements, wherein an object rests on a capacitive sensor array;
FIG. 4 shows a visual representation of mutual capacitive measurements, wherein two objects rest on a capacitive sensor array;
FIGS. 5a-c show visual representations of mutual capacitive measurements, wherein a rectangular metal plate is resting on a capacitive sensor array and the metal plate has three different orientations;
FIG. 6 shows a visual representation of row-extended mutual capacitance measurements, wherein a capacitive sensor array is touched by five fingers;
FIG. 7 shows a visual representation of fully extended mutual capacitance measurements, wherein a rectangular conductive object is lying at a 40 degree angle to a capacitive sensor array;
FIG. 8 shows a visual representation of fully extended mutual capacitance measurements, wherein the rectangular conductive object of FIG. 7 is lying parallel to a capacitive sensor array;
FIG. 9 shows a visual representation of fully extended mutual capacitance measurements, wherein four objects are lying on a capacitive sensor array; and
FIG. 10 shows a schematic representation of row and column electrodes of a capacitive sensor array.

In the following, the techniques of this disclosure will be further explained using the example of a capacitive sensor array being part of a touch screen that is embodied as a touch table. Note that the application is, however, not limited to touch tables or touch screens, but could also be applied to other capacitive sensors, including capacitive sensors which are arranged in a three-dimensional surface or capacitive sensors that have smaller or even greater dimensions.

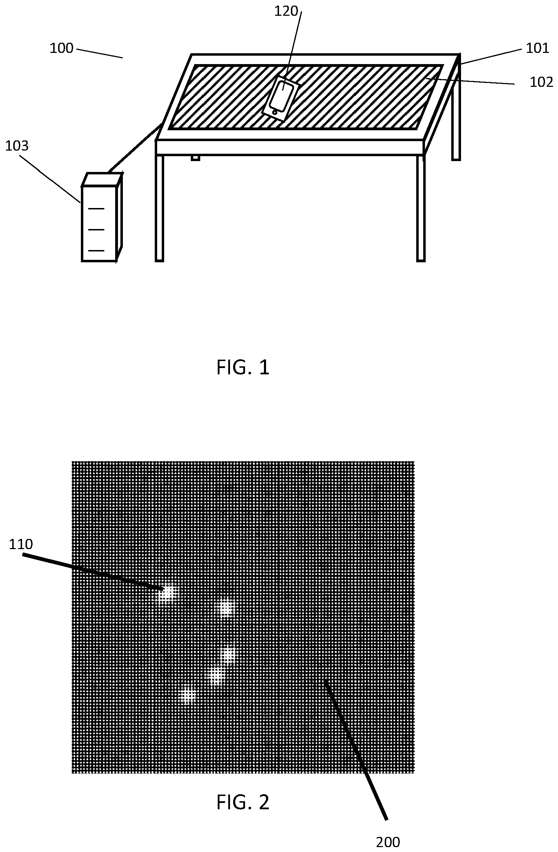

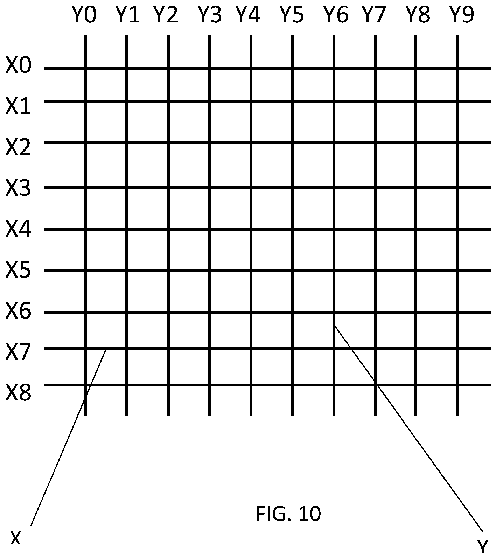

FIG. 1 shows a sensor system 100 including a touch table 101, which comprises a capacitive sensor array 102 mounted on the table top and/or forming the table top of the touch table 101. The touch table 101 can have display, and as such, can be envisaged as a touch screen. More specifically, the touch table 101 comprises a glass display, into which two layers of conductors are embedded, namely a set of row electrodes X and a set of column electrodes Y, see also FIG. 10. The change in capacitance between the two sets of electrodes X, Y is measured and a touch can be detected by way of said change in capacitance and also by projecting the touched location based on a change of capacitance at multiple measurement points. In the present example, mutual capacitance mode is used, so that each row electrode X and each column electrode Y can be driven to a specific voltage and frequency, thereby enabling precise localization of touches, even when there are multiple simultaneous touches. The sensor system 100 is thus configured to detect multiple simultaneous touches at the same time.

FIG. 10 shows a schematic representation of the capacitive sensor array 102 comprising a set of nine row electrodes X0-X8 and a set of 10 column electrodes Y0-Y9. In the following, for ease of description the row electrodes are labelled "X" and the column electrodes are labelled "Y". In the depicted example, there are nine row electrodes and ten column electrodes. However, the present disclose is not limited thereto, and other numbers of row and column electrodes are also contemplated by the present disclosure.

The row electrodes X typically run parallel to each other. Further, the column electrodes Y may also run parallel to each other. The row electrodes X and the column electrodes intersect or cross each other. Often, both the row electrodes X and the column electrodes Y extend in a substantially straight manner. In some embodiments, however, the row electrodes X and/or the column electrodes Y may include non-straight portions, e.g. angled or curved portions. The row electrodes X and the column electrodes Y may be arranged at an angle to each other. In the depicted embodiment, said angle is 90°, however, smaller angles, e.g. between 45° and 90° or greater angles, e.g. between 90° and 135° are also contemplated by the present disclosure. The row electrodes X may lie in a first plane. Similarly, the column electrodes Y may lie in a second plane, which usually differs from the first plane of the row electrodes X. The first and second planes may be aligned parallel to each other.

The mutual capacitive sensor array 102 has a capacitor at each intersection of each row electrode X and each column electrode Y. In the depicted example, the 9-by-10 grid of the capacitive sensor array has 90 independent capacitors. Bringing an object, body part or conductive stylus near the surface of the capacitive sensor array 102 changes the local electric field which reduces the mutual capacitance. The capacitance change at every individual capacitor of the capacitive sensor array 102 can be measured to accurately determine a touch location by measuring the voltage in the other axis. Mutual capacitive sensors are known to the skilled person, and a further detailed description thereof is omitted.

The sensor system 100 also includes a controller 103, which is connected to the touch table 101, e.g. wirelessly or by dedicated wires as indicated in FIG. 1 in order to exchange signals and/or data and/or messages. The controller 103 may also be integrated into the touch table 101. The controller 103 is configured to apply drive signals to the row electrodes X and the column electrodes Y of the capacitive sensor array 102. Furthermore, the controller 103 is configured to receive sense signals from the row electrodes X and the column electrodes Y of the capacitive sensor array 102. To this end the controller 103 can comprise drive circuitry to apply the drive signals and sense circuitry to receive the sense signals. The controller 103 can further comprise at least one processor for processing data, e.g. analysing the received sense signals. The controller 103 allows multi-touch operation where multiple objects, fingers, palms or styli can be accurately tracked by the controller 103 at the same time.

The present disclosure aims at detecting an object 120 resting on the touch table 100, regardless of whether the object 120 is touched (or grounded) or not. Furthermore, the techniques, devices/systems and methods of the present disclosure enables detection of objects 120 that are not necessarily designed to be detected by a capacitive sensor array 102. Further, even though the objects 120 are typically placed onto the touch table 100, and thus touched by a user, the objects 120 can be recognized by the controller when they are ungrounded, i.e. no longer touched. Notably, an electrically conductive ungrounded object 120 which is touched by a person standing next to the touch table becomes a grounded object.

In preferred embodiments, the object 120 is at least partially electrically conductive and/or has electrically conductive sections which can interact with or couple to the electrodes X, Y of the capacitive sensor array 102. For instance, the object may have an electrically conductive housing or other electrically conductive parts that come into contact with the capacitive sensor array 103 and/or the display of the touch table 101. Possible objects 120 are described e.g. in WO 2019/201464 A1 and WO 2021/063927 A1.

In accordance with the present invention, the controller 103 is configured to
- S10: apply a drive signal to a first electrode being selected from the set of row electrodes X or the set of column electrodes Y.

For ease of description, in the following the first electrode is one of the row electrodes X, for example one of the electrodes X0 - X8 shown in FIG. 10. Of course, instead of a row electrode, the first electrode can alternatively be one of the column electrodes Y, for example one of the electrodes Y0 - Y9 shown in FIG. 10.

The controller 103 is further configured to
- S12: receive a sense signal from at least a second electrode being selected from the same set of electrodes X as the first electrode.

The second electrode thus runs parallel to the first electrode. Further, the second electrode differs from the first electrode, i.e. the driven first electrode is different from the sensed second electrode. For instance, the first and second electrodes can be neighbouring electrodes. Alternatively or additionally, the first and second electrodes are spaced apart by at least a further electrode of the same set of electrodes X as the first and second electrodes extending between the first and second electrodes.

For example, the first electrode is electrode X4 shown in FIG. 10. Neighbouring row electrodes of electrode X4 are electrodes X3 and X5. Further, electrodes X0, X1, X2 on the one hand and electrode X4 on the other hand are spaced apart at least by electrode X3. Still further, electrodes X6, X7, X8 on the one hand and electrode X4 on the other hand are at least spaced apart by electrode X5. Thus, the second electrode can comprise at least one of electrodes X0, X1, X2, X3, X5, X6, X7, X8 if the first electrode is X4.

This is in contrast with conventional controllers for performing mutual capacitive touch measurements, which measure electrodes crossing the driven electrode. In the following, driving and measuring electrodes running parallel to each other in accordance with the above may be sometimes referred to as extended mutual capacitive touch.

Still further, the controller 103 is configured to
- S14: determine that an object 120 is located on the capacitive sensor array 102 based on the received sense signal.

The object 120 located on the capacitive sensor array 102 changes and/or causes a capacitive coupling between the first electrode and the second electrode. For instance, the received sense signal is caused by a coupling of the drive signal applied to the first electrode into the second electrode through the object 120 located on the capacitive sensor array 102. Said coupling may occur for instance if the object 120 rests on the table, and an electrically conductive part of the object 120 overlaps with the first electrode and the second electrode. In this case, the driven signal provided by the controller 103 and applied to the first electrode is transmitted through the electrically conductive object 120 and passes into the second electrode. This results in a higher measured signal at the second electrode, and indicates a so-called anti-touch. In contrast, a lower measured signal as compared to a calibrated value may indicate a touch, e.g. generated by a finger touching the capacitive sensor array 102. In other words, the received sense signal may comprises a retransmission signal having an amplitude that is larger than that of a capacitive touch signal. Therefore, the controller 103 can distinguish retransmission signals from capacitive touch signals based on the sign of the amplitude change of the signals compared to a calibrated value.

The controller 103 may be further configured to
- S13: receive an auxiliary sense signal from the first electrode, preferably while driving the first electrode.

In this case, the first electrode is driven and also measured by the controller 103. The other electrodes of the set of electrodes X to which the first electrode belongs are in this case either grounded or measured with different frequencies. In a further step, the controller 103 may be configured to
- S15: determine that an object 120 is located on the capacitive sensor array 102 based on the received sense signal and the received auxiliary sense signal.

Using both the sense signal(s) and the auxiliary sense signal(s) can further improve accuracy of the determination that the object 120 is located on the capacitive sensor array 102.

In some implementations, the controller 103 is further configured to
- S16: determine where the object 120 is located on the capacitive sensor array 102 and/or how the object 120 is oriented on the capacitive sensor array 102 based on a plurality of received sense signals.

While the location of the object on the capacitive sensor array 102 can be determined, as least in principle, by one measurement, the determination of the orientation of the object may require at least two, preferably at least three measurements of different electrode combinations. Accuracy of determination of the location and the orientation of the object on the capacitive sensor array 102 can be further improved by performing multiple measurements of different combinations of driven electrodes and sensed electrodes.

For instance, the controller 103 can be configured to
- apply drive signals to a plurality of first electrodes being selected from the set of row electrodes X and/or the set of column electrodes Y and/or
- receive sense signals from a plurality of second electrodes running parallel to the plurality of first electrodes.

To distinguish the drive signals and sensed signals from the various electrodes the controller 103 can be configured to apply the drive signals to the plurality of first electrodes sequentially or simultaneously using different drive frequencies. The drive frequencies may include values of at least 20 kHz and/or values of at most 300 kHz.

Exemplary controllers driving electrodes at different frequencies are known from US 10 917 101 and US 2020/0257428 A1. Therefore, further explanation of driving electrodes at different frequencies is omitted.

It should be noted that the controller 103 may not only drive and sense electrodes running parallel to each other. Rather, the controller 103 can receive sense signals from at least one of the column electrodes Y upon driving the row electrode X. More specifically, the controller 103 can be configured to
- S18: apply a second drive signal to the first electrode,
- S20: receive a second sense signal from at least a third electrode being selected from the other set of electrodes Y, wherein the third electrode crosses the first electrode.

In other words, the controller 103 can be also configured to perform conventional mutual capacitive touch measurements. The controller 103 may be configured to apply the second drive signal to the first electrode more frequently than the first drive signal to the first electrode.

The controller 103 may generate a capacitance matrix comprising row and column elements based on the drive signals and the associated sensed signals and/or a capacitive image 200 comprising pixels based on the drive signals and the associated sensed signals. The generated capacitance matrix and/or capacitive image 300 may aid in interpreting the sensed signals received from the second electrode(s). For instance, techniques from computer vision may help find patterns in the received sense signals, the capacitance matrix and/or the capacitive image 300 to enable object recognition and/or determination of the location and orientation of the object on the touch table 101.

The sensor system 100 may further comprise a memory, e.g. a non-volatile memory and/or a volatile memory. The memory may include program instructions to control the capacitive sensor array and/or previous measurements and/or capacitance matrices and/or capacitive images 300. Current measurements can thus be compared, e.g. by the controller 103, with the previous measurements and/or capacitance matrices and/or capacitive images 300 included in the memory.

To increase detection accuracy, the controller 103 can be configured to ground the remaining of the row electrodes X and the column electrodes Y which are currently neither driven nor sensed.

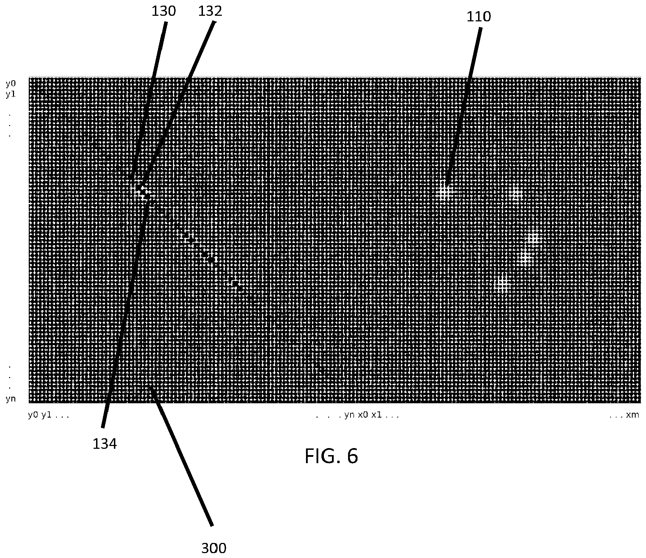

In the following, visual representations of capacitive sensor data are discussed, see in particular FIGS. 2-9. Conventional mutual capacitive touch images are illustrated in FIGS. 2-5. Extended mutual capacitive touch images in accordance with embodiments of the present invention are presented in FIGS. 6-9.

The visual representations comprise the aforementioned capacitive images 300. The visual representations are generally obtained from the sensor data by way of a linear transformation and/or normalization to ensure that the data for visual representation lies between 0 and 1 and can, therefore, be displayed as a greyscale image. Generally, in the appended FIGS. 2-9 50% grey pixels indicate signals being substantially equal to a reference signal, a baseline or a calibration signal. Brighter pixels, e.g. white pixels, indicate signals being lower than a reference signal, a baseline or a calibration signal, and are usually associated with touch signals. Darker pixels, e.g. black pixels, indicate signals being higher than a reference signal, a baseline or a calibration signal, and are usually associated with retransmission signals or anti-touch signals. It should be noted that this transformation may be only done for visualization, the actual processing of the data can be carried out on the measured data.

FIG. 2 shows a conventional capacitive image 200 including five touches 110 in mutual capacitive data. The bright areas of the capacitive image 200 can be associated with the touches 110.

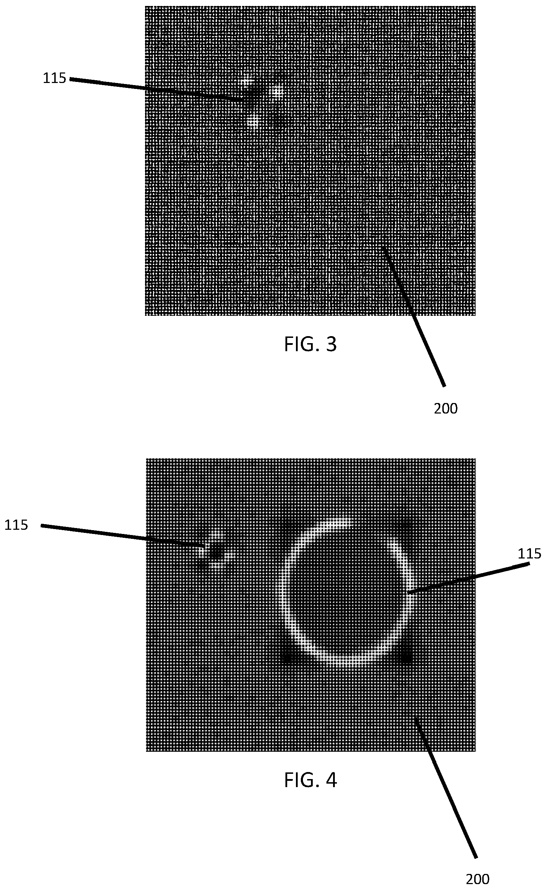

FIG. 3 and FIG. 4 show conventional capacitive images 200 of a sensor array 102 on which objects 115 are placed. Here, the capacitive images 200 not only comprises bright areas, but also dark areas which are associated with anti-touch points. The objects 115 indicated in FIGS. 3 and 4 are specially designed for detection by conventional mutual capacitive touch controllers. The touch points can be matched to known layouts of points and the object position and rotation can be recognised. For this reason, these objects 115 can be reliably detected on the capacitive sensor array 102 regardless of their orientation on the sensor array 102. In FIG. 4, objects 115 having patterns of conductive materials, such as conductive ink or ITO coating on PET film, can be designed to be tracked using more advanced computer vision and machine learning approaches based on the raw capacitive mutual sensor data. The patterns are no longer confused with touches and smaller and more varied patterns are made possible. Exemplary objects 115 having electrically conductive patterns are disclosed in WO 2021/063927 A1.

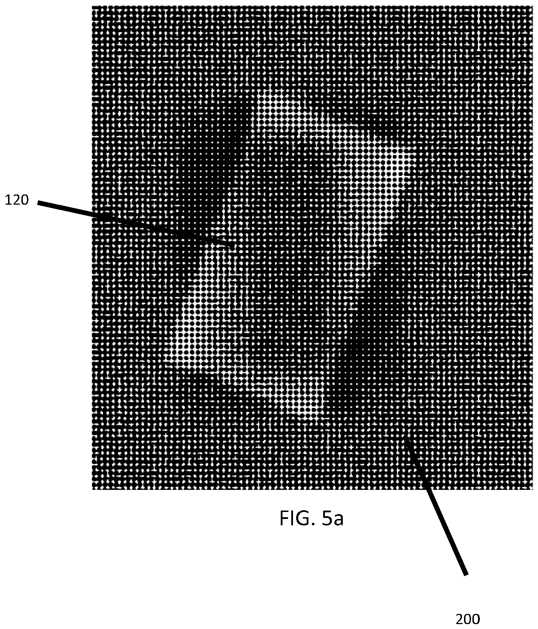

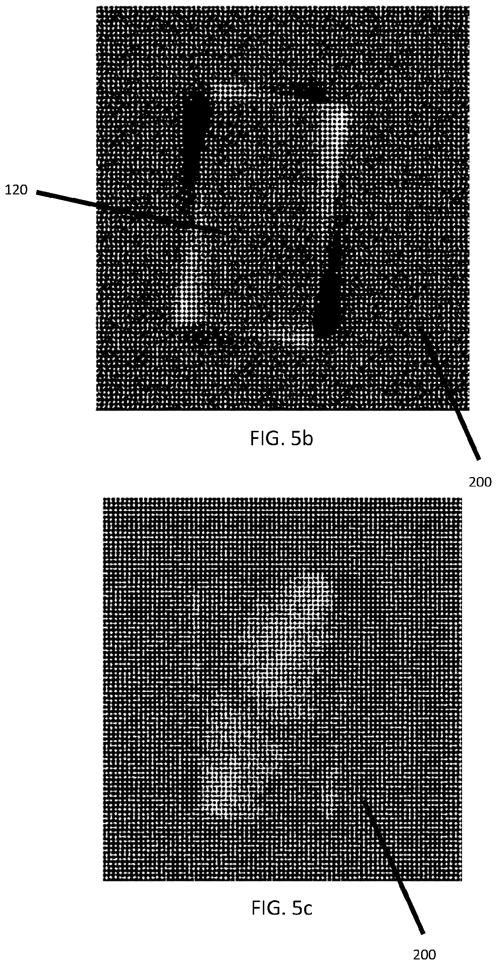

Some objects 120 with electrically conductive parts, such as smartphones, are detectable without an additional conductive pattern even using conventional mutual capacitive measurements. For instance, FIGS. 5a-5c show conventional capacitive images 200 of a sensor array 102 on which an object 120 is placed, wherein the object 120 is not specially designed for detection by mutual capacitive touch controllers. As can be seen in FIGS. 5a and 5b, the object 120 has a rectangular shape. In some instances, the object can be a metal plate or can have an electrically conductive housing. In the depicted example, the object 120 is a mobile phone, more specifically a smartphone placed at different orientations on the capacitive sensor array 102. In FIGS. 5a and 5b, the rectangular object 120 lies at a tilted angle to the direction of the electrodes X and Y of the capacitive sensor array 102. As a consequence, the smartphone 120 is visible in the mutual capacitive data. One can discern brighter and darker areas showing a coupling of the object to the sensor wires. Combining this information with sensor data from the smartphone itself allows the tracking of individual smartphones on the surface of the capacitive sensor array 102, see e.g. WO 2019/201464 A1. However, when the device 120 is placed at a multiple of 90 degrees relative to the direction of the sensor grid (i.e. parallel or perpendicular) the positive signals and negative retransmission cancel out and the device is difficult to reliably track. This situation is depicted in FIG. 5c. The object 120 is almost invisible in the data.

The pixels of the capacitive images 200 of FIGS. 2-5 each correspond to each crossing of pair of electrodes X, Y. Thus, the capacitive images 200 of FIGS. 2-5 are obtained by mutual capacitance measurements made only between row-column pairs of electrodes.

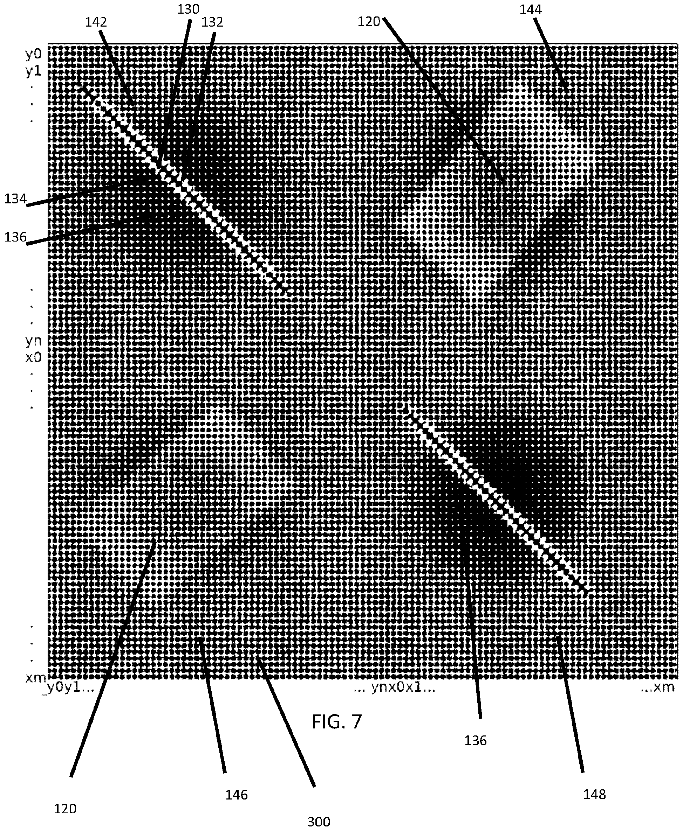

Some aspects of the present disclosure relate to extended mutual capacitive touch, whereby mutual capacitive measurements are not only made between row-column pairs of electrodes, but also between row-row and/or column-column pairs. When the controller 103 drives a row electrode X, it not only measures the change in capacitance of all the columns Y, as in traditional mutual capacitance, but also all of the row electrodes X, sometimes also including the driven row. An associated extended capacitive image 300 is shown in FIG. 6. Taking this further, the controller 103 can also be programmed to also drive every column electrode Y, measuring along every row electrode X and every column electrode Y. This is presented as full extended mutual capacitance (see FIGS. 7-9). With the aid of the capacitive images 300 shown in FIGS. 6-9 object recognition is enabled for non-grounded electrically conductive objects 120 resting on the capacitive sensor array 102 or the touch table 101. Despite the objects 120 having sub-optimal geometry or being placed parallel to the electrodes X, Y, the measured data can be processed to accurately track the position and orientation of said object on the capacitive sensor array 102.

The right side of FIG. 6 shows a representation of row-column measurements similar to that of FIG. 2, while the left side of FIG. 6 shows a representation of column-column measurements. The respective row and column electrodes are indicated in FIG. 6 by X0, X1 ... Xm and Y0, Y1 .... Yn, wherein n and m are integers greater than 1. The integers m and n can differ from each other, but can also have the same value. The capacitive image 300 of FIG. 6 shows five touches 110 e.g. generated by fingers of a user.

The diagonal 130 in the left side of FIG. 6 indicates measurements where the driven electrode Y and the sensed electrode Y are the same (also labelled Yk-Yk axis, wherein 0 ≤ k ≤ n), see also the upper left quadrants in FIGS. 7-9. Note the strong positive values (dark pixels) along the diagonal 130 corresponding to anti-touch signals. A further characteristic feature are the strong negative values (bright pixels) at the secondary diagonals 132, 134, the secondary diagonals 132, 134 being adjacent to the diagonal 130 and determined by Yk-Yk+1 and at Yk-Yk-1. Similar characteristic features can be observed in the quadrant 148 corresponding to the row-row measurements.

The measurements at the secondary diagonal Yk-Yk+1 and at the secondary diagonal Yk-Yk-1 indicate that the column electrode Yk is driven and the column electrode Yk+1 and Yk-1 are measured, respectively, where the Yk+1 and Yk-1 electrodes are the neighbouring electrodes of Yk.

The negative values measured at the neighbouring electrodes of the driven electrode can be explained as follows. Usually, a neighbouring electrode may already have a more or less strong coupling to the driven electrode, due to their mutual small distance. Thus, such a coupling is often present even in the absence of an object crossing both electrodes. If the object 120 is located on the capacitive sensor array 102, the object 120 may cause the drive signal to be spread out over the surface of the capacitive sensor array 102 covered by the object 120. Therefore, the coupling of the driven electrode to the neighbouring electrode may be less than when in absence of the object 120, which leads to a decrease in signal strength measured in the sensed electrode being directly adjacent to the driven electrode. This decrease in signal strength is a characteristic signal which the controller 103 may use for object and/or touch recognition.

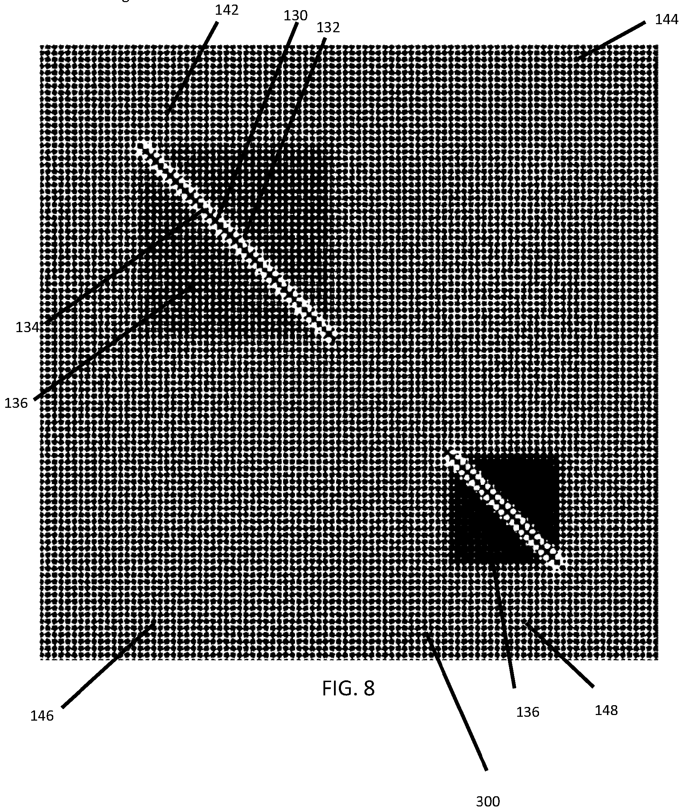

FIG. 7 shows a full extended mutual capacitance frame including four quadrants 142, 144, 146 and 148. In the first quadrant 142, column-column measurements are shown. The second and third quadrants 144, 146 show traditional column-row and row-column measurements, respectively. The fourth quadrant 148 shows row-row measurements. FIG. 7 illustrates capacitive images of a rectangular electrically conductive object 120 lying at a 40 degree angle to the sensor grid. FIG. 8 shows capacitive images of the same object 120 as FIG. 7, however a longitudinal axis (e.g. a first symmetry axis) and a lateral axis (e.g. a second symmetry axis) of the rectangular object 120 are aligned parallel to the row and column electrodes X, Y of the capacitive sensor array 102, respectively. In FIG. 8, the object 120 is almost invisible in the traditional mutual capacitance images of the top right and bottom left quadrants 144, 146. However, the first and third quadrants 142, 148 clearly show coupling of the object 120 and the electrodes X, Y. More specifically, in the first quadrant 142 along the diagonal Yk-Yk 130, strong negative values are measured, while the secondary diagonal Yk-Yk+1132 and the secondary diagonal Yk+1-Yk 134 show strong positive values. Similar observations can be made in the fourth quadrant 148. Moreover, the rectangular shape of the object 120 can be derived by combining the measurements of the first and fourth quadrants 148. Further, negative signals corresponding to retransmission can be observed in areas 136 of the capacitance images 300.

By combining the measurements of all four quadrants 142, 144, 146, 148, and optionally comparing these measurements with stored measurements or stored patterns, further conclusions about the location and the orientation of the object 120 can be drawn. Thus, by using the full extended capacitive data not only can the presence of the object 120 on the capacitive sensor array 102 be detected, but also the location and the orientation of the object 120 on the capacitive sensor array 120.

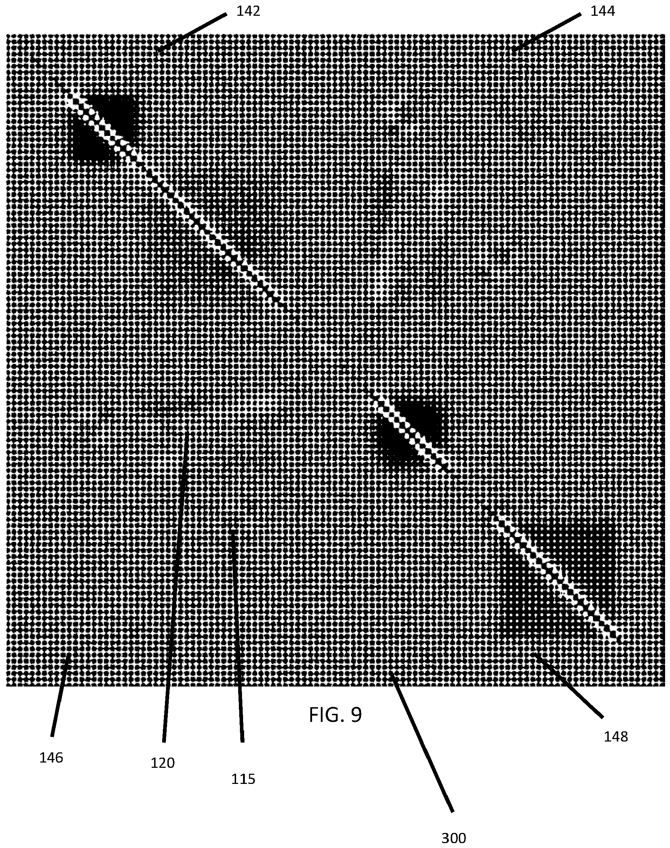

FIG. 9 shows a capacitive image 200 of two smartphones 120 and two further objects lying on the capacitive sensor array 102. The sensitivity of the extended capacitive data is apparent.

The extended mutual capacitive measurements can be made together, alternately, or the row-row or column-column measurements can be made less frequently than the traditional mutual capacitance measurements (e.g. every 10th frame), since they may not be needed for high speed tracking as in the case of touches. Row-row and column-column measurements may also be made along fewer electrodes, for example taking every I-th row electrode and/or taking every J-th column electrode in cases where bandwidth is limited.

The diagonal Yk-Yk 130 can be described as self capacitance measured one by one and all others grounded or all measured with different frequencies. Notably, in conventional systems this is explicitly not done to avoid retransmission.

Again, it is noted that, even though the first electrode and the second electrodes are sometimes described in the above description as being a row electrode X, and the third electrode being a column electrode Y, a skilled reader understands that the first and second electrodes can also be a column electrode Y, and the third electrode can be a row electrode X.

The present disclosure also relates to a method for controlling a capacitive sensor array 102, in particular the capacitive sensor array 102 described above. The method includes at least the steps of
- S10 applying a drive signal to a first electrode being selected from the set of row electrodes X or the set of column electrodes Y;
- S12 receiving a sense signal from at least a second electrode being selected from the same set of electrodes X, Y; and
- S14 determining that an object 120 is located on the capacitive sensor array 102 based on the received sense signal,

As indicated above, the object 120 located on the capacitive sensor array 102 changes and/or causes a capacitive coupling between the first electrode and the second electrode.

In some implementations, at least one of a symmetry axis, a longitudinal axis and a lateral axis of the object 120 located on the capacitive sensor array 102 is aligned parallel to the row electrodes X and/or the column electrodes Y. In accordance with the above, the object 120 optionally has a rectangular shape.

The method may include further steps that have been described above, in particular at least one or more of the steps S13, S15, S16, S18, S20. In particular, the method can be performed by the controller 103 or the sensor system 100 described above.

### List of reference signs:

- 100: sensor system
- 101: touch table
- 102: capacitive sensor array
- 103: controller
- 110: touch
- 115: object
- 120: object
- 130: diagonal
- 132: secondary diagonal
- 134: secondary diagonal
- 136: retransmission signal
- 142: first quadrant
- 144: second quadrant
- 146: third quadrant
- 148: fourth quadrant
- 200: mutual capacitive image
- 300: extended mutual capacitive image
- X: row electrode
- Y: column electrode

## Claims

1. Controller (103) for controlling a mutual capacitive sensor array (102), wherein the capacitive sensor array (102) comprises a set of row electrodes (X) and a set of column electrodes (Y), the controller (103) configured to
- apply a drive signal to a first electrode being selected from the set of row electrodes (X) or the set of column electrodes (Y);
- receive a sense signal from at least a second electrode being selected from the same set of electrodes as the first electrode; and
- determine that an object (115, 120) is located on the capacitive sensor array (102) based on the received sense signal,
wherein the object (115, 120) located on the capacitive sensor array (102) changes and/or causes a capacitive coupling between the first electrode and the second electrode.

2. The controller (103) according to claim 1, wherein
- the first and second electrodes are neighbouring electrodes or
- the first and second electrodes are spaced apart by at least a further electrode of the same set of electrodes (X, Y) as the first and second electrodes extending between the first and second electrodes,
wherein the first and second electrodes preferably run parallel to one another.

3. The controller (103) according to any one of the preceding claims, wherein the received sense signal is caused by a coupling of the drive signal applied to the first electrode into the second electrode through the object (115, 120) located on the capacitive sensor array (102).

4. The controller (103) according to any one of the preceding claims, wherein the controller (103) is further configured to determine where the object (115, 120) is located on the capacitive sensor array (102) and/or how the object (115, 120) is oriented on the capacitive sensor array (102) based on a plurality of received sense signals.

5. The controller (103) according to any one of the preceding claims, wherein the controller (103) is further configured to
- receive an auxiliary sense signal from the first electrode, preferably while driving the first electrode, and
- determine that an object (115, 120) is located on the capacitive sensor array (102) based on the received sense signal and the received auxiliary sense signal.

6. The controller (103) according to any one of the preceding claims, wherein the controller (103) is configured to generate
- a capacitance matrix comprising row and column elements based on the drive signals and the associated sensed signals and/or
- a capacitive image (300) comprising pixels based on the drive signals and the associated sensed signals.

7. The controller (103) according to any one of the preceding claims, wherein the object (115, 120) is at least partially electrically conductive, and grounded or non-grounded.

8. The controller (103) according to any one of the preceding claims, wherein the controller (103) is configured to
- apply drive signals to a plurality of first electrodes being selected from the set of row electrodes (X) and/or the set of column electrodes (Y) and/or
- receive sense signals from a plurality of second electrodes running parallel to at least some of the plurality of first electrodes.

9. The controller (103) of claim 8, wherein the controller (103) is configured to apply the drive signals to the plurality of first electrodes sequentially and/or simultaneously at different drive frequencies.

10. The controller (103) according to any one of the preceding claims, wherein the controller (103) is further configured to
- apply a second drive signal to the first electrode,
- receive a second sense signal from at least a third electrode being selected from the other set of electrodes (Y, X), wherein the third electrode crosses the first electrode.

11. The controller (103) according to claim 10, wherein the controller (103) is configured to apply the second drive signal to the first electrode more frequently than the first drive signal to the first electrode.

12. The controller (103) according to any one of the preceding claims, wherein the controller (103) is configured to ground the remaining of the row electrodes (X) and the column electrodes (Y) which are currently neither driven nor sensed.

13. A sensor system (100), comprising
- a mutual capacitive sensor array (102) including a set of row electrodes (X) and a set of column electrodes (Y); and
- a controller (103) for controlling the capacitive sensor array (102) according to any one of the preceding claims.

14. Method for controlling a capacitive sensor array (102), wherein the capacitive sensor array (102) comprises a set of row electrodes (X) and a set of column electrodes (Y), the method including the steps
- applying a drive signal to a first electrode being selected from the set of row electrodes (X) or the set of column electrodes (Y);
- receiving a sense signal from at least a second electrode being selected from the same set of electrodes (X, Y); and
- determining that an object (115, 120) is located on the capacitive sensor array (102) based on the received sense signal,
wherein the object (115, 120) located on the capacitive sensor array (102) changes and/or causes a capacitive coupling between the first electrode and the second electrode.

15. The method of the preceding claim, wherein at least one of a symmetry axis, a longitudinal axis and a lateral axis of the object (115, 120) located on the capacitive sensor array (102) is aligned parallel to the row electrodes (X) and/or the column electrodes (Y), wherein the object (115, 120) optionally has a rectangular shape.
